# EUROPÄISCHE PATENTANMELDUNG

(11) **EP 1 224 872 A2**
(43) Veröffentlichungstag der Anmeldung: **24.07.2002**
(21) Anmeldenummer: 02000838.9
(22) Anmeldetag: 15.01.2002
(51) Int. Cl.: A23L 2/60, A23L 2/52

(54) **Geschmackverbesserung von Getränken**

(30) Priorität: 20.01.2001 DE 10102525
(71) Anmelder: Nutrinova Nutrition Specialties & Food Ingredients GmbH, 65929 Frankfurt am Main (DE)
(72) Erfinder: Dörr, Margit, 67591 Hohen-Sülzen (DE); Ritter, Guido, Dr. Prof., 48366 Laer (DE); ter Meer, Hans-Ulrich, Dr., 60431 Frankfurt am Main (DE)
(74) Vertreter: Schweitzer, Klaus, Dr.

(57) **Zusammenfassung**

Die Erfindung betrifft Getränke, die dadurch gekennzeichnet sind, dass sie mindestens ein Xylooligosaccharid und mindestens einen Intensivsüßstoff enthalten. Die Erfindung betrifft weiterhin ein Verfahren zur Herstellung dieser Getränke, sowie die diesbezügliche Verwendung von Xylooligosacchariden.

## Beschreibung

Der Gesamteindruck von alkoholfreien Getränken wird geprägt von Aroma, Süßeeindruck, Säureeindruck und Farbe. Die Qualität und insbesondere der Geschmack eines Getränkes wird durch das sensorische Zusammenspiel der Inhaltsstoffe maßgeblich beeinflusst. Deshalb müssen die Inhaltsstoffe in ihrer sensorischen Wirkung sorgfältig aufeinander abgestimmt werden.

Ist z.B. das Verhältnis von Süße und Säure in einem Getränk unpassend, dann schmeckt das Getränk unharmonisch. Sowohl eine starke Süße, die nicht durch Säure ausbalanciert wird, wie auch überhöhte Säure bei geringer Süße werden als ausgeprägte Qualitätsmängel empfunden.

Ein unausgeglichenes Süße-Säure-Verhältnis lässt sich durch andere Inhaltsstoffe teilweise, aber meistens doch nicht befriedigend, kompensieren. Der Einsatz von Aromen, ggf. auch in erhöhten Konzentrationen ist dafür ebenfalls nicht geeignet. Ganz im Gegenteil müssen bei der Herstellung eines Getränks die Dosierungen von Süßungs- und Säuerungsmitteln sorgfältig auf die verwendeten Aromen abgestimmt werden, da anderenfalls Einzelkomponenten des Aromas unerwünscht hervortreten oder abgeschwächt werden können. Im Bereich üblicher, mit Zuckerarten gesüßter Rezepturen spielen Zucker (Saccharose) in reiner oder auch teilweise invertierter Form oder Glucose-Fructose-Sirupe über ihre Funktion als Süßungsmittel hinaus eine wichtige Rolle. Sie bewirken einen vollmundigen Geschmackseindruck und lassen dadurch viele Aromen ausgewogen und gut hervortreten.

Aufgrund der verschiedenen sensorischen Eigenschaften der Inhaltstoffe ist es nicht einfach, ein geschmacklich harmonisches Getränk zu entwickeln. Das gilt insbesondere, wenn anstelle des herkömmlichen Zuckers (Saccharose) oder der Glucose-Fructose-Sirupe Intensivsüßstoffe eingesetzt werden sollen.

Intensivsüßstoffe erreichen das Geschmacksprofil des Zuckers erfahrungsgemäß nicht, wenn sie als Einzelkomponenten eingesetzt werden. Es ist seit langem bekannt, dass Mischungen von Intensivsüßstoffen zu einem besseren Süßgeschmack führen können als Einzelsüßstoffe. Solche Süßstoffmischungen für Getränke sind z.B. die früher oft verwendete Kombination von Saccharin und Cyclamat im Verhältnis 1 : 10 oder die geschmacklich bessere, heute verbreitete Mischung von Acesulfam-K und Aspartam in etwa gleichen Teilen. Das Geschmacksprofil, also der zeitliche Verlauf der Süßewahrnehmung, ist bei der letzteren Mischung bereits relativ zuckerähnlich, jedoch fehlt insbesondere bei ausschließlich mit Intensivsüßstoffen gesüßten, aber auch bei zuckerreduzierten und zusätzlich Intensivsüßstoffe enthaltenden Getränken häufig die wichtige Vollmundigkeit, welche die geschmackliche Harmonie von Aroma, Süße und Säure beschreibt und sich nicht nur auf ein volles Mundgefühl bezieht. Diese Vollmundigkeit ist für einen besonders harmonischen Geschmackseindruck unerlässlich.

Auch wenn die geschmackliche Qualität von Intensivsüßstoffe enthaltenden Getränken durch die Verfügbarkeit neuer Süßstoffe mit verbesserten Eigenschaften bereits deutlich gesteigert werden konnte, besteht doch immer noch das Problem der fehlenden Vollmundigkeit bei diesen Getränken.

Es wurde bereits auf verschiedene Weise versucht, durch unterschiedliche Komponenten, die einem Getränk zugesetzt wurden, die Vollmundigkeit eines Getränkes zu erreichen. Zur Verbesserung des Mundgefühls durch eine Anhebung der Viskosität, sowie zur Geschmacksverbesserung hinsichtlich der Süße von Süßstoffgesüßten Getränken wurden bestimmte Oligosaccharide wie z.B. Fructooligosaccharide oder Galactooligosaccharide vorgeschlagen. (Siehe DE 196 53 354). Fructooligosaccharide sind z. B. Inulin und Oligofructose. Sie werden auf Grund ihrer verdauungsfördernden Eigenschaften verschiedenen Lebensmitteln, insbesondere Milchprodukten zugegeben. Um in Getränken überhaupt eine Wirkung in der gewünschten Richtung, d.h. Vollmundigkeit, zu erreichen, müssen jedoch erhebliche Mengen von diesen Oligosacchariden, oft bis zu 10 Gew.-%, dem Getränk beigemischt werden. Dadurch entstehen erhebliche Kosten, die über denen herkömmlicher Süßungen mit Zucker oder Glucose-Fructose-Sirupen liegen können. Da sie in großen Mengen zudosiert werden müssen, ist die verdauungsfördernde Wirkung, deretwegen sie in anderen Lebensmitteln eingesetzt werden, entsprechend auch bei Getränken zu erwarten. Da Getränke in größeren Mengen als derartige Lebensmittel verzehrt werden, können möglicherweise stärkere, in der Regel dann unerwünschte Effekte auftreten. Auch andere geschmacksmodifizierende Stoffe, die zur Anhebung der Vollmundigkeit bei Getränken vorgeschlagen worden sind, z. B. Maltol, zeigen nicht die gewünschten Effekte oder sind nur mit bestimmten Aromen verträglich.

Es besteht also weiterhin Bedarf an für Getränke geeigneten, problemlos verwendbaren Zutaten, mit denen die Vollmundigkeit von Getränken gesteigert und damit die geschmackliche Qualität verbessert werden kann.

Es wurde nun gefunden, dass Xylooligosaccharide zur Vollmundigkeit von Getränken beitragen. Überraschenderweise können Xylooligosaccharide bereits bei relativ kleinen Zugabemengen die Vollmundigkeit von Getränken mit Intensivsüßstoffen und damit den geschmacklichen Gesamteindruck signifikant verbessern.

Die Erfindung betrifft dementsprechend ein Getränk, welches dadurch gekennzeichnet ist, dass es Xylooligosaccharid und mindestens einen Intensivsüßstoff enthält.

Unter 'Getränken' im erfindungsgemäßen Sinne werden insbesondere (alkoholfreie), auf Wasser basierende Erfrischungsgetränke, wie z.B. Limonaden oder solche auf der Basis von Milch oder gesäuerter Milch oder solche auf Basis von Malz oder anderen kohlenhydrathaltigen Rohstoffen verstanden. Diese Getränke können auch Kohlendioxid enthalten.

Die in den erfindungsgemäßen Getränken eingesetzten Xylooligosaccharide sind bevorzugt Verbindungen der Formel I.

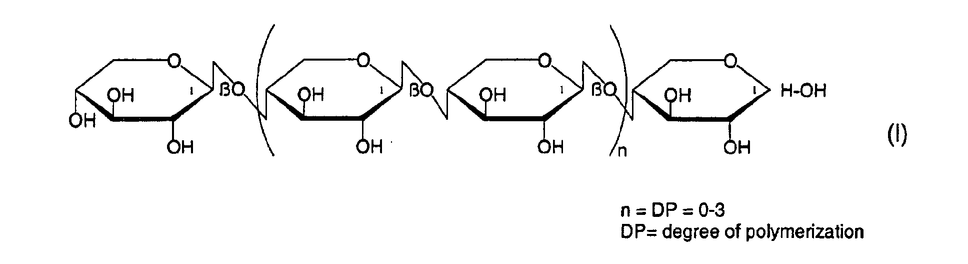

Besonders bevorzugt sind Xylooligosaccharide mit einem Polymerisationsgrad von DP =1 bis 10, bevorzugt DP=2 bis 5, ganz besonders bevorzugt DP=2 bis DP=3 sowie Mischungen aus Xylooligosacchariden mit unterschiedlichen Polymerisationsgraden. Die erfindungsgemäßen Xylooligosaccharide können zum Beispiel durch enzymatische Hydrolyse von Xylan, beispielsweise aus Maiskolben und Baumwollsaat hergestellt werden. Sie bestehen hauptsächlich aus Xylobiose (Formel I, n=0) und Xylotriose (Formel I, n=1) und haben etwa ein Viertel der Süßkraft von Saccharose, weisen also eine geringe Süße auf. Sie sind als Pulver und als Sirup (mit z. B. 70 % Trockensubstanz) verwendbar.

Die Xylooligosaccharide werden den erfindungsgemäßen Getränken zweckmäßigerweise in Mengen von 0,01 - 5,00 Gew.-%, insbesondere 0,1 - 2,0 Gew.-%, bevorzugt 0,6 - 0,9 Gew.-%(bezogen als reines (100 %-iges) Xylooligosaccharid auf das Getränk) zugegeben. Überraschenderweise haben Xylooligosaccharide die erfindungsgemäße Wirkung gerade in relativ niedrigeren Konzentrationen. Werden sie in höheren Konzentrationen eingesetzt, wie sie beispielsweise bei Fructooligosacchariden nötig wären, tritt keine weitere Verbesserung im Geschmack ein oder aber sie verändern die Süßeintensität und/oder das Süßeprofil eines Getränkes, so dass das Getränk insgesamt sogar nachteilig verändert werden kann.

Die Abmischung mit den Getränken kann auf übliche Weise erfolgen, beispielsweise durch Zudosierung während der Getränkeherstellung oder durch Zumischung zu einem Getränkebestandteil.

Xylooligosaccharide steigern die Vollmundigkeit der Getränke deutlich, so dass ein Produkt resultiert, dessen Geschmack in Aroma, Süße und Säure exzellent harmoniert und zuckerähnlich ist.

Unter 'Intensivsüßstoffen' im erfindungsgemäßen Sinn werden beispielsweise Acesulfam, Alitam, Aspartam, Cyclamat, Neohesperidin-Dihydrochalcon, Neotam, Saccharin, Sucralose und Thaumatin oder deren wasserlösliche Natrium-, Kalium- und Calciumsalze sowie Mischungen aus zwei oder mehreren dieser Intensivsüßstoffe verstanden.

Die erfindungsgemäßen Getränke können auf natürlichen Fruchtsäften oder deren Konzentrate aber auch auf Aromen, Essenzen und Extrakten basieren.

Sofern zweckmäßig, können die Xylooligosaccharide zur Herstellung von zuckerreduzieten Getränken auch in Kombination mit Zucker (Saccharose), Glucose oder Fructose - in fester oder sirupöser Form - eingesetzt werden.

Im Folgenden wird die Erfindung anhand von Beispielen näher erläutert:

### Beispiele

Xylooligosaccharide (XOS) wurden in ein carbonisiertes alkoholfreies Erfrischungsgetränk mit Cola-Aroma (Cola-Grundstoff Nr. 6030 bzw. 340415, Fa. Döhler, Darmstadt, Deutschland) zudosiert und sensorisch untersucht. Das als XOS 95 P bezeichnete Produkt ist ein pulverförmiges Oligosaccharidgemisch, das mindestens 95 Gewichts% Xylooligosaccharide enthält ("Xylo-oligo 95 P", Suntory Limited, Tokyo, Japan). Das Produkt XOS 70 S ist ein Xylooligosaccharidsirup mit 70 % Trockensubstanz ("Xylo-oligo 70", Suntory Limited, Tokyo, Japan), das mindestens 70 Gew.-% XOS enthält. Sie wurden in Konzentrationen von 0,75 Gew.-% (pulverförmiges Produkt) bzw. 1 Gew.-% (Sirup, entsprechend ca. 0,7 % Trockensubstanz) eingesetzt. Gew.-% sind bezogen auf die gesamte Getränkerezeptur.

Das Getränk wurde mit weltweit typischen Einsatzmengen an Süßstoffen oder bei Mischungen in weltweit typischen Einsatzmengen und Einsatzverhältnissen gesüßt
1. mit einer Kombination aus den Süßstoffen Acesulfam-K (Sunett, Nutrinova, Frankfurt, Deutschland) und Aspartam (Aspartam, Holland Sweetener Company, Niederlande)
2. mit einer gleichsüßen Konzentration an Aspartam als Einzelsüßstoff.

Die nachstehende Tabelle zeigt das Ergebnis der sensorischen Prüfung dieser Getränke.

| | Kontrolle | Cola mit 0,75 % XOS Pulver Beispiel 1 | Cola mit 1 % XOS Sirup Beispiel 2 |
|---|---|---|---|
| Cola-Grundstoff 6030 | 5g | 5 g | 5g |
| XOS 95 P | - | 7,5 g | - |
| XOS 70 S | - | - | 10,0 g |
| Acesulfam-K | 0,130 g | 0,130 g | 0,130 g |
| Aspartam | 0,305g | 0,305g | 0,305g |
| CO₂ | 5 g | 5g | 5g |
| Wasser | ad 1 I | ad 1 I | ad 1 I |
| Sensorische Beurteilung | | | |
| | angenehme Süße, angenehmes Aroma, Säure deutlich wahrnehmbar | Süße-Säure-Verhältnis ausgewogener, harmonischerer Geschmack als Kontrolle | Süßeprofil besser als bei Kontrolle, sehr zuckerähnlich, harmonischer und vollerer Geschmack als Kontrolle |

| | Kontrolle | Cola mit 0,75 % XOS Pulver Beispiel 3 | Cola mit 1 % XOS Sirup Beispiel 4 |
|---|---|---|---|
| Cola-Grundstoff 340415 | 5,5 g | 5,5 g | 5,5 g |
| XOS 95 P | - | 7,5 g | - |
| XOS 70 S | - | - | 10,0 g |
| Acesulfam-K | 0,130 g | - | - |
| Aspartam | 0,305 g | 0,850 g | 0,850 g |
| CO₂ | 5 g | 5g | 5g |
| Wasser | ad 1 I | ad 1 I | ad 1 I |
| Sensorische Beurteilung | | | |
| | angenehme Süße, angenehmes Aroma, Säure deutlich wahrnehmbar | Süße-Säure-Verhältnis ausgewogen, harmonischerer, runderer und frischerer Geschmack als Kontrolle | runderer und harmonischerer Geschmack als Kontrolle, sehr gutes Mundgefühl |

Die Ergebnisse belegen, dass Xylooligosaccharide bereits in geringen Konzentrationen in Getränken mit Intensivsüßstoffen bessere Vollmundigkeit und einen abgerundeteren Geschmack ergeben als bei handelsübliche Formulierungen ohne XOS.

Auf der anderen Seite führt der Zusatz von einer größeren Menge an XOS zu keiner weiteren Bevorzugung. Das folgende Beispiel zeigt einen Paarvergleich zwischen einem Colagetränk mit 0,75% und 5% XOS.

| | Cola mit 0,75 % XOS Pulver Beispiel A | Cola mit 5 % XOS Pulver Beispiel B |
|---|---|---|
| Cola-Grundstoff | 5 g | 5 g |
| XOS 95 P | 7,5 g | 50 g |
| Acesulfam-K | 0,130 g | 0,130 g |
| Aspartam | 0,305 g | 0,305 g |
| CO₂ | 5g | 5g |
| Wasser | ad 1 I | ad 1 I |
| | | |

| Sensorischer Test: Duotest (direkter Vergleich der beiden XOS -Rezepturen ) | | |
|---|---|---|
| Welche Probe ist süßer? | keine Signifikanz | keine Signifikanz |
| Welche Probe ist besser im Geschmack? | keine Signifikanz | keine Signifikanz |
| Welche Probe ist zuckerähnlicher? | keine Signifikanz | keine Signifikanz |

Das folgende Beispiel zeigt, dass ein anderes typischerweise eingesetztes Oligosaccharid (Fructooligosaccharid; FOS) bei geringen, jedoch im Vergleich zu den niedrigen Einsatzkonzentrationen der XOS schon etwas gesteigerten Konzentrationen von 2 %, keinen oder sogar einen nachteiligen Effekt auf das Mundgefühl und die Süßewahrnehmung hat. Hierbei wurden in einer beschreibenden Sensorik Lösungen von Süßungsmischungen in Wasser mit und ohne Zusatz von FOS getestet (Größe des Kollektives N=20). Als Maß wurde eine zehnstufige Skale (0: sehr gering; früh bis 10= sehr stark; sehr spät) verwendet.

| Probe | Fülle des Körpers | Dauer der Süße | austrocknend |
|---|---|---|---|
| 140 ppm Acesulfam-K + 140 ppm Aspartam | 5,3 | 4,8 | 0,2 |
| 140 ppm Acesulfam-K + 140 ppm Aspartam + 2% FOS | 4,2 | 4,0 | 0,8 |
| 7,7% Sucrose + 2% FOS | 5,0 | 4,5 | 0,0 |

Die folgenden Beispiele zeigen die Wirkung höherer Konzentrationen an Xylooligosacchariden:

| | Kontrolle | Trinkjoghurt mit 5,0 % XOS Pulver Beispiel 5 | Trinkjoghurt mit 5,0 % XOS Sirup Beispiel 6 |
|---|---|---|---|
| Molke | 300 g | 300 g | 300 g |
| Multivitaminsaft ("Valensina", Deutschland) | 100 g | 100 g | 100 g |
| Zucker | 85 g | - | - |
| Acesulfam-K | - | 0,09 g | 0,09 g |
| Aspartam | - | 0,09 g | 0,09 g |
| XOS 95 P | - | 50 g | - |
| XOS 70 S | - | - | 50 g |
| handelsüblicher Natur-Joghurt (1,5 % Fett) | ad 1000 g | ad 1000 g | ad 1000 g |

| Sensorischer Test: Duotest (direkter Vergleich der beiden XOS -Rezepturen mit der Kontrolle) | | | |
|---|---|---|---|
| Welche Probe ist süßer? | | keine Signifikanz | keine Signifikanz |
| Welche Probe ist besser im Geschmack? | | keine Signifikanz | keine Signifikanz |
| Welche Probe ist zuckerähnlicher? | | keine Signifikanz | keine Signifikanz |

Es wird deutlich, dass weder ein Produkt mit 5 % XOS Pulver noch mit 5 % XOS Sirup gegenüber der Kontrolle hinsichtlich Geschmack oder Zuckerähnlichkeit bevorzugt wird.

## Patentansprüche

1. Getränk, **dadurch gekennzeichnet, dass** es mindestens ein Xylooligosaccharid und mindestens einen Intensivsüßstoff enthält.

2. Getränk gemäß Anspruch 1, **dadurch gekennzeichnet, dass** als Xylooligosaccharid eine Verbindung der Formel I 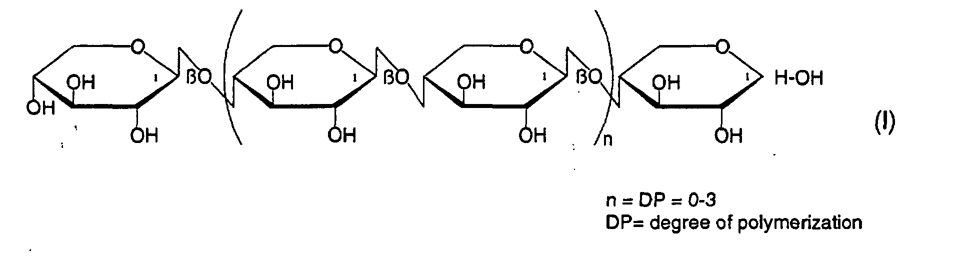 verwendet wird.

3. Getränk gemäß Anspruch 1 oder 2, **dadurch gekennzeichnet, dass** das Xylooligosaccharid einen Polymerisationsgrad von DP =1 bis 10 besitzt.

4. Getränk gemäß Anspruch 1, 2 oder 3, **dadurch gekennzeichnet, dass** das Getränk 0,01 bis 5 Gew.-% (bezogen auf das Getränk) Xylooligosaccharid enthält.

5. Getränk gemäß einem der Ansprüche 1 bis 4, **dadurch gekennzeichnet, dass** der Intensivsüßstoff ausgewählt wird aus der Gruppe: Acesulfam, Alitam, Aspartam, Cyclamat, Neohesperidin-Dihydrochalcon, Neotam, Saccharin, Sucralose, Thaumatin, wasserlösliche Natrium-, Kalium-, Calciumsalze dieser Intensivsüßstoffe und Mischungen aus zwei oder mehreren Mitgliedern dieser Gruppe.

6. Getränk gemäß einem der Ansprüche 1 bis 5, auf der Basis von Wasser, Milch oder gesäuerter Milch, Aromen, Essenzen, Auszügen aus Früchten oder Fruchtsäften oder Extrakten aus Malz oder anderen kohlenhydrathaltigen Rohstoffen.

7. Getränk gemäß Anspruch 1, **dadurch gekennzeichnet, dass** es außerdem Zucker (Saccharose), Glucose und/oder Fructose in fester oder sirupöser Form enthält.

8. Getränk gemäß Anspruch 5, **dadurch gekennzeichnet, dass** als Intesivsüßstoff eine Mischungen aus Acesulfam-K (= Kaliumsalz des Acesulfams) und Aspartam eingesetzt wird.

9. Getränk gemäß einem der Ansprüche 1 bis 8, **dadurch gekennzeichnet, dass** es Kohlendioxid enthält.

10. Verfahren zur Herstellung eines Getränks nach Anspruch 1, **dadurch gekennzeichnet, dass** man einem Getränk mindesten ein Xylooligosaccharid und mindestens einen Intensivsüßstoff hinzufügt.

11. Verwendung von Xylooligosacchariden zur Herstellung von Getränken.
